# EUROPEAN PATENT APPLICATION

(11) **EP 4 535 268 A1**
(43) Date of publication of application: **09.04.2025**
(21) Application number: 24198534.0
(22) Date of filing: 05.09.2024
(51) Int. Cl.: G06Q 20/36, G06Q 20/40, H04L 9/32, H04L 9/00

(54) **METHODS AND SYSTEMS FOR GENERATING BEHAVIOR EMBEDDED ENTITY SPECIFIC CRYPTOCURRENCY TRANSACTIONS**

(30) Priority: 04.10.2023 IN 202321066550
(71) Applicant: Tata Consultancy Services Limited, Maharashtra (IN)
(72) Inventor: PUVVADA, DINESH SRIVASTHAV, 500034 Hyderabad, Telangana (IN); APTE, MANOJ MADHAV, 411028 Pune, Maharashtra (IN)
(74) Representative: Goddar, Heinz J.

(57) **Abstract**

The huge size of ever-increasing cryptocurrency data makes investigating transactions for identifying fraudulent activities challenging. Conventional Artificial Intelligence (AI) models trained on a sample cryptocurrency transaction dataset are not scalable or efficient and getting required labelled data for training the Al models is a challenge due to the pseudo-anonymity of entities in cryptocurrency transactions. The present disclosure enables generating of patterned transactions pertaining to different entities using an input specification in the form of a transaction schema that describes one or more parameters including one or more entities, a quantity of cryptocurrency transactions, time frame; and a pattern describing a typology for the cryptocurrency transactions to be generated. The input specification is processed to simulate customizable and scalable training data characterized by the behavior or nature of entities seen in the real world and associated with different patterns including the money laundering patterns described in the input specification.

## Description

### CROSS-REFERENCE TO RELATED APPLICATIONS AND PRIORITY

The present application claims priority to Indian application, Application No. 202321066550, filed in India on 4th October 2023.

### TECHNICAL FIELD

The disclosure herein generally relates to the field of generating training data for training Artificial Intelligence (AI) models, and, more particularly, to methods and systems for generating behavior embedded entity specific cryptocurrency transactions of required classes and distribution without having to collect or manage mammoth cryptocurrency data.

### BACKGROUND

Bitcoin blockchain data is mammoth and ever increasing. Therefore, it takes enormous infrastructure and computational resources for handling, and processing this data for getting any meaningful insights. As numerous crimes happen through Bitcoin, primarily due to its pseudo-anonymity and other salient functional properties, it is crucial to investigate Bitcoin transactions for identifying suspicious and illicit activities. However, due to its huge size, collecting, processing, and handling Bitcoin transactions is a major challenge in this space.

### SUMMARY

Embodiments of the present disclosure present technological improvements as solutions to one or more of the above-mentioned technical problems recognized by the inventors in conventional systems.

In an aspect, there is provided a processor implemented method comprising: receiving, via one or more hardware processors, a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, characterized by an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set; transforming, via the one or more hardware processors, the transaction schema into a data frame using a parser; and generating the one or more sets of cryptocurrency transactions from the data frame, via the one or more hardware processors. The step of generating the one or more sets of cryptocurrency transactions comprises: parsing the data frame to identify (i) one or more unique entities from the one or more entities and (ii) a transaction type associated with the description of each set from the one or more sets of cryptocurrency transactions; creating one or more addresses for each of the one or more unique entities based on a set of factors; initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame; and performing iteratively, for each cryptocurrency transaction in each set from the one or more sets of cryptocurrency transactions in the schema, the steps of: checking availability of the one or more addresses of the one or more inputs, created for each of the one or more unique entities for performing a cryptocurrency transaction, based on an associated UTXO and the embedded behavior; computing an In Value amount as a sum of the UTXOs associated with the one or more inputs that are randomly selected from each of the available one or more addresses; deducting a transaction fee from the InValue amount to obtain an OutValue amount; identifying number of one or more output addresses, based on the OutValue amount, the transaction type and an associated embedded behavior; distributing the OutValue amount among the identified number of one or more output addresses based on the transaction type and the associated embedded behavior, wherein the one or more output addresses are randomly selected from the one or more addresses associated with the corresponding one or more entities, received in the transaction schema; updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the one or more sets of cryptocurrency transactions; assigning a unique alphanumeric transaction hash to each transaction of the one or more sets of cryptocurrency transactions; recording, for each transaction of the one or more sets of cryptocurrency transactions, attributes including the unique alphanumeric transaction hash, the addresses of the one or more inputs of the cryptocurrency transaction, the addresses of the one or more outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction; and updating the UTXOs associated with each of the one or more addresses by adding the received OutValue amounts by the outputs to their respective UTXOs and eliminating the UTXOs spent by the one or more inputs, wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

In another aspect, there is provided a system comprising a memory storing instructions; one or more communication interfaces; and one or more hardware processors coupled to the memory via the one or more communication interfaces, wherein the one or more hardware processors are configured by the instructions to: receive a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, characterized by an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set; transform the transaction schema into a data frame using a parser; and generate the one or more sets of cryptocurrency transactions from the data frame. Generating the one or more sets of cryptocurrency transactions comprises: parsing the data frame to identify (i) one or more unique entities from the one or more entities and (ii) a transaction type associated with the description of each set from the one or more sets of cryptocurrency transactions; creating one or more addresses for each of the one or more unique entities based on a set of factors; initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame; and performing iteratively, for each cryptocurrency transaction in each set from the one or more sets of cryptocurrency transactions in the schema, the steps of: checking availability of the one or more addresses of the one or more inputs, created for each of the one or more unique entities for performing a cryptocurrency transaction, based on an associated UTXO and the embedded behavior; computing an In Value amount as a sum of the UTXOs associated with the one or more inputs that are randomly selected from each of the available one or more addresses; deducting a transaction fee from the InValue amount to obtain an OutValue amount; identifying one or more number of output addresses, based on the OutValue amount, the transaction type and an associated embedded behavior; distributing the OutValue amount among the identified number of one or more output addresses based on the transaction type and the associated embedded behavior, wherein the one or more output addresses are randomly selected from the one or more addresses associated with the corresponding one or more entities, received in the transaction schema; updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the one or more sets of cryptocurrency transactions; assigning a unique alphanumeric transaction hash to each transaction of the one or more sets of cryptocurrency transactions; recording, for each transaction of the one or more sets of cryptocurrency transactions, attributes including the unique alphanumeric transaction hash, the addresses of the one or more inputs of the cryptocurrency transaction, the addresses of the one or more outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction; and updating the UTXOs associated with each of the one or more addresses by adding the received OutValue amounts by the one or more outputs to their respective UTXOs and eliminating the UTXOs spent by the one or more inputs, wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

In yet another aspect, there are provided one or more non-transitory machine-readable information storage mediums comprising one or more instructions which when executed by one or more hardware processors cause: receiving a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, characterized by an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set; transforming the transaction schema into a data frame using a parser; and generating the one or more sets of cryptocurrency transactions from the data frame. The step of generating the one or more sets of cryptocurrency transactions comprising: parsing the data frame to identify (i) one or more unique entities from the one or more entities and (ii) a transaction type associated with the description of each set from the one or more sets of cryptocurrency transactions; creating one or more addresses for each of the one or more unique entities based on a set of factors; initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame; and performing iteratively, for each cryptocurrency transaction in each set from the one or more sets of cryptocurrency transactions in the schema, the steps of: checking availability of the one or more addresses of the one or more inputs, created for each of the one or more unique entities for performing a cryptocurrency transaction, based on an associated UTXO and the embedded behavior; computing an In Value amount as a sum of the UTXOs associated with the one or more inputs that are randomly selected from each of the available one or more addresses; deducting a transaction fee from the InValue amount to obtain an OutValue amount; identifying number of one or more output addresses, based on the OutValue amount, the transaction type and an associated embedded behavior; distributing the OutValue amount among the identified number of one or more output addresses based on the transaction type and the associated embedded behavior, wherein the one or more output addresses are randomly selected from the one or more addresses associated with the corresponding one or more entities, received in the transaction schema; updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the one or more sets of cryptocurrency transactions; assigning a unique alphanumeric transaction hash to each transaction of the one or more sets of cryptocurrency transactions; recording, for each transaction of the one or more sets of cryptocurrency transactions, attributes including the unique alphanumeric transaction hash, the addresses of the one or more inputs of the cryptocurrency transaction, the addresses of the one or more outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction; and updating the UTXOs associated with each of the one or more addresses by adding the received OutValue amounts by the one or more outputs to their respective UTXOs and eliminating the UTXOs spent by the one or more inputs, wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

In accordance with an embodiment of the present disclosure, the one or more entities are associated with an entity type, and wherein the entity type is licit, nested exchange, escrow-ent, service address, mixer-ent, exchange, crypto lending, interim address, mule, decentralized exchange, business or single use address.

In accordance with an embodiment of the present disclosure, each set from the one or more sets of cryptocurrency transactions is associated with the transaction type wherein the transaction type is regular, investor-lender-depositor (ILD), coinjoin, single use -->single use (Sgl -->Sgl), mixer-Txn, peer-to-peer (P2P), single use to general (Sgl -->gen), general to single use (gen → Sgl), escrow-Txn, Depositor -> Lender -> Investor (DLI), general to general (gen → gen), or collaboration between the one or more inputs and the one or more outputs (in+out → in+out).

In accordance with an embodiment of the present disclosure, the set of factors that define the quantity of the one or more addresses includes: number of times each of the one or more unique entities are described in the transaction schema; whether each of the one or more unique entities is part of the one or more inputs or the one or more outputs; and the quantity of cryptocurrency transactions corresponding to each of the one or more unique entities in an associated set of cryptocurrency transactions, described in the transaction schema.

In accordance with an embodiment of the present disclosure, in the event that the description of each set from the one or more sets of cryptocurrency transactions comprises only (i) the quantity of the one or more sets of cryptocurrency transactions to be generated and (ii) the pattern describing a typology for the one or more sets of cryptocurrency transactions to be generated for the associated set, the remaining parameters from the one or more parameters in the transaction schema are auto filled based on a pre-populated repository of transaction schemas with typologies described therein.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
**FIG.1** illustrates an exemplary block diagram of a system for generating behavior embedded entity specific cryptocurrency transactions, in accordance with some embodiments of the present disclosure.
**FIG.2** illustrates a high-level input/output diagram of the system of FIG. 1, in accordance with some embodiments of the present disclosure.
**FIG.3A** through **FIG.3E** illustrate a computer implemented method for generating behavior embedded entity specific cryptocurrency transactions, in accordance with some embodiments of the present disclosure.
**FIG.4** illustrates an input/output diagram of a transaction simulator module comprised in the system of FIG. 1 (not shown), in accordance with some embodiments of the present disclosure.
**FIG.5** illustrates a high-level flow chart of the working of a function mapper module comprised in the system of FIG.1 (not shown), in accordance with some embodiments of the present disclosure.
**FIG.6** illustrates a practical application for the system of FIG.1 in an Anti-Money Laundering (AML) use case, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Bitcoin's blockchain data is increasing at the rate of a gigabyte every few days and has exceeded 500 gigabytes in 2023. The huge size of this ever-increasing data makes collecting, processing, and handling of this data a challenge for investigating Bitcoin transactions for identifying suspicious and illicit activities. Enormous infrastructure and computational resources are also required for enabling any meaningful insights into this data. Most of the existing methods to investigate Bitcoin transactions use a small sample of data collected over a short interval. Artificial Intelligence (AI) models trained on such datasets are neither scalable nor can they detect illicit activities efficiently. Also, state of the art AI models need labelled data for analytics, but due to the pseudo-anonymity of entities in Bitcoin transactions, obtaining labelled data is a challenge.

Some technical challenges with state-of-the-art solutions for scrutinizing bitcoin transactions include:
(i) Strenuous manual data collection because a Bitcoin core node has data in a raw format and is mammoth in size. As transactions span across a long timeframe, managing multiple data dumps and extracting the needed transactions is a laborious job. There are Application programming interface (API) limitations if using a third-party block explorer.
(ii) Non availability of scalable or customizable datasets.
(iii) Severe class imbalance problems with lack of needed distribution for specific use cases because of small static datasets.
(iv) Lack of dynamic ways to add more transactions or samples with modified patterns considering patterns change over time.
(v) Inability to identify complex money laundering trails considering some simulation-based works are based on the distribution of the entire Bitcoin data basis preliminary parameters available on public block explorers. Such works rely on few parameters that do not consider the specific characteristics of money laundering related entities and are therefore insufficient to identify complex money laundering trails.
(vi) Missing entity-level categorization in existing datasets since data is classified into two high-level classes of licit and illicit without a detailed analysis of underlying category (type of transaction).

Prior art mostly suggests ways to utilize existing data. As against this, the present disclosure is directed towards generating customizable data that is entity specific and embedded with behavioral characteristics and patterns to effectively train AI models. Furthermore, unlike conventional approaches which use static datasets or rely on manual collection of data having computational complexities, the present disclosure provides a scalable and customizable dataset with resource light infrastructural requirements.

Based on an explorative study of behavioral patterns of several entities that are often seen in a crypto money laundering trail, various money laundering patterns in transactions between entities were identified. In the context of the present disclosure, the expression 'entities' refer to entities themselves and representatives of the entities. For instance, service addresses are not entities by themselves like an exchange. Many entities can have their own set of service addresses. Therefore, they are not explicit entities. However, a service address is operated by an entity. Thus, in accordance with the current disclosure, when a transaction flow with transactions from one entity to other is created, service addresses come in and represent the entity beneath. So, in such cases, those service addresses are considered as entities for tracking. Single use addresses and Interim addresses are also representatives of entities but will be treated as entities, in the context of the present disclosure.

The methods and systems of the current disclosure enable generation of behavior embedded Bitcoin like transactions, the generated transactions being characterized by the behavior or nature of the entities seen in the real world and associated with different patterns including the money laundering patterns. Although there is a specific reference to Bitcoin in the specification, it may be understood by those skilled in the art that the methods and systems of the current disclosure may be extended to other types of cryptocurrencies such as Litecoin, Bitcoin Cash, Dash, Cardano, and the like with appropriate modifications. Furthermore, in the context of the present disclosure, input(s) and output(s) of a transaction are interchangeably referred as sender(s) and receiver(s) respectively. Likewise, the expressions classes and entities may be used interchangeably.

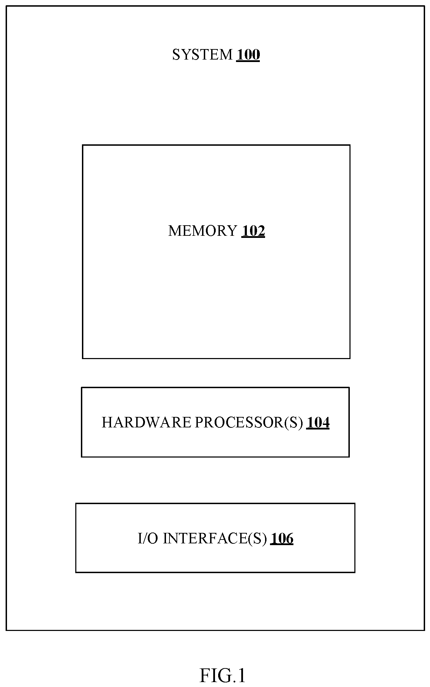

Referring now to the drawings, and more particularly to FIG. 1 through FIG.6, where similar reference characters denote corresponding features consistently throughout the figures, there are shown preferred embodiments and these embodiments are described in the context of the following exemplary system and/or method.

FIG.1 illustrates an exemplary block diagram of a system 100 for generating behavior embedded entity specific cryptocurrency transactions, in accordance with some embodiments of the present disclosure. In an embodiment, the system 100 includes one or more hardware processors 104, communication interface (s) or input/output (I/O) interface(s) 106, and one or more data storage devices or memory 102 operatively coupled to the one or more hardware processors 104. The one or more hardware processors 104 can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The communication interface (s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface(s) can include one or more ports for connecting a number of devices to one another or to another server.

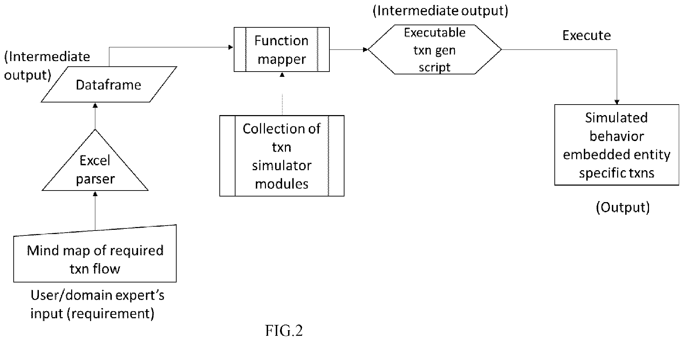

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. FIG.2 illustrates a high-level input/output diagram of the system of FIG. 1, in accordance with some embodiments of the present disclosure. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis, particularly functionalities represented by modules (described herein below). The modules are implemented as at least one of a logically self-contained part of a software program, a self-contained hardware component, and/or, a self-contained hardware component with a logically self-contained part of a software program embedded into each of the hardware component that when executed perform the method 300 described hereinafter. Accordingly, the modules are invoked by the one or more hardware processors 104 to perform the method 300 of the present disclosure.

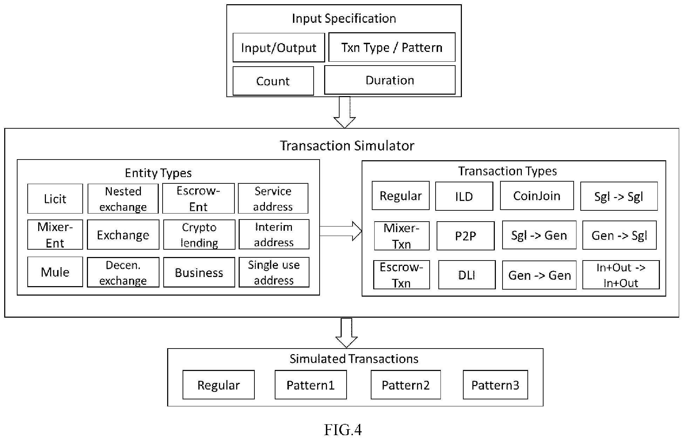

In accordance with the present disclosure, there is a function mapper module (shown in FIG.2) and 29 transaction simulator modules for simulating various types of transactions, based on one or more parameters (described later), each transaction being characterized by 7 attributes (described later). While FIG.4 illustrates an input/output diagram of a transaction simulator module comprised in the system 100 of FIG. 1 (not shown), in accordance with some embodiments of the present disclosure, detailed below are specific requirements of each of the 29 transaction simulator modules that include:
1) **Txn**
   **Input:** var1,var2,var3,mini,ts
   **Description:** Generation of regular type of transactions without any explicit patterns. It is commonly used by all the entities.
   **Input description:** var1 = sender accounts/entity of sender required, var1 = receiver accounts/entity of receiver required, var3 = quantity of transactions for this pair of inputs and outputs needed, mini = minimum number of accounts needed on either side of the transaction, ts = timestamp before which these transactions are to be generated. These parameters are the default for all the modules and hold the same definition.
2) **Txn_var12**
   **Input:** var1,var2,var3,mini,ts
   **Description:** Transaction generation where inputs and outputs collaborate in inputs itself. A branch of txn module.
3) **Txn_mn**
   **Input:** var1,var2,var3,mini1, mini2,ts
   **Description:** Used if specific number of accounts should only participate on either side of a transaction. m,n refers to the number of accounts on sender and receiver sides respectively which are specified by mini1 and mini2 apart from other 4 default input parameters.
4) **Txn_sgl_sgl**
   **Inputs:** var1,var2,var3,ts
   **Description:** Generates transactions where both sender and receiver are of single use type. Therefore, all the sender accounts are removed from availability once used and receiver accounts cannot receive again.
5) **Txn_sgl_gen**
   **Inputs:** var1,var2,var3,ts
   **Description:** Generates transactions where the sender accounts are of single use type and receiver accounts are general. Therefore, all the sender accounts are removed from availability once used.
6) **Txn_gen_sgl**
   **Inputs:** var1,var2,var3,ts
   **Description:** Generates transactions where the receiver accounts are of single use type and sender accounts are general. Therefore, receiver accounts cannot receive again.
7) **Txn_sgl_gen_coinjoin**
   **Inputs:** var1,var2,var3,ts
   **Description:** Generates transactions where the sender accounts are of single use type and receiver accounts are general. Therefore, all the sender accounts are removed from availability once used. Additionally, coinjoin like property of all the outputs receiving same value will be embedded here.
8) **Txn_sgl_sgl_coinjoin**
   **Inputs:** var1,var2,var3,ts
   **Description:** Generates transactions where both sender and receiver are of single use type. Therefore, all the sender accounts are removed from availability once used and receiver accounts cannot receive again. Additionally, coinjoin like property of all the outputs receiving same value will be embedded here.
9) **Txn_gen_sgl_coinjoin**
   **Inputs:** var1,var2,var3,ts
   **Description:** Generates transactions where the receiver accounts are of single use type and sender accounts are general. Therefore, receiver accounts cannot receive again. Additionally, coinjoin like property of all the outputs receiving same value will be embedded here.
10) **Txn_var12_coinjoin**
   **Input:** var1,var2,var3 ,ts
   **Description:** Transaction generation where inputs and outputs collaborate in inputs itself. Additionally, coinjoin like property of all the outputs receiving same value will be embedded here. This is true coinjoin transaction format. The above three are coinjoin like transactions as the inputs and outputs or different entities are not collaborating.
11) **Avail_8k**
   **Inputs:** var1 (var1 = list of accounts whose availability has to be checked)
   **Description:** To check the availability of accounts mentioned in var1
   **Output:** List of available accounts based on their Unspent Transaction Outputs (UTXOs) and threshold criteria. Additional check here is to have the UTXOs above 8000 satoshis so that even if a single account is considered for the input of transaction, the transaction can still be processed.
12) **Avail_norm**
   **Inputs:** var1 (var1 = list of accounts whose availability has to be checked)
   **Description:** To check the availability of accounts mentioned in var1
   **Output:** List of available accounts based on their UTXOs and threshold criteria
13) **Avail_p2p**
   **Inputs:** var1 (var1 = list of accounts whose availability has to be checked)
   **Description:** To check the availability of accounts mentioned in var1. An additional check here is to only accept those UTXOs that are greater than 25005460 sats. This is because there are certain trading limits at decentralized exchanges and escrow services.
   **Output:** List of available accounts based on their UTXOs and threshold criteria
14) Update
   **Inputs:** inputs, outputs, in_value, fees, ts,ac,var3
   **Description:** To update outvalue (value each recipient would receive), UTXO and latest timestamps of all the accounts involved, transaction hashes for the generated transactions
   **Input description:** inputs, outputs = inputs and outputs finalized for the transaction, in_value = respective values of the inputs of this transaction, fees = fees computed for this transaction, ts = same timestamp defined earlier, ac = availability list, var3 = quantity of transactions. These descriptions hold true for other update functions as well.
15) **Update12**
   **Inputs:** inputs, outputs, in_value, fees, ts,ac,var3
   **Description:** To update outvalue (value each recipient would receive), UTXO and latest timestamps of all the accounts involved, transaction hashes for the generated transactions. Update function pertaining to txn_var12. Invalue (-fee and threshold) will be distributed for inputs+outputs instead of outputs.
16) **Update_coinjoin**
   **Inputs:** inputs, outputs, in_value, fees, ts,ac,var3
   **Description:** To update outvalue (value each recipient would receive), UTXO and latest timestamps of all the accounts involved, transaction hashes for the generated transactions. Update function for coinjoin type of transactions where single use addresses are present on one or both sides. Equal outvalue distribution is done here. However, single use addresses are omitted from getting added to the counterpart as they cannot be used again. These are coinjoin like transactions were outvalue is same for all, but inputs and outputs are not collaborated due to the presence of single use addresses on one or both sides.
17) **Update_coinjoin12**
   **Inputs:** inputs, outputs, in_value, fees, ts,ac,var3
   **Description:** To update outvalue (value each recipient would receive), UTXO and latest timestamps of all the accounts involved, transaction hashes for the generated transactions. Update function for coinjoin type of transactions. Equal outvalue distribution is done here and inputs and outputs are collaborated on either side.
18) **Mx1**
   **Input:** A parameter list -- list of tuples of arguments needed for each sub-function call
   **Description:** A sequential combination of 5 different types of transactions is called with the intervention of funds at step-3. The number of sequences of function calls and the function calls here are different from other mixers implemented. This is true for the mixers Mx2, Mx3, and Mx4 as well.
19) **Mx2**
   **Input:** A parameter list -- list of tuples of arguments needed for each sub-function call
   **Description:** A sequential combination of 5 different types of transactions is called with the intervention of funds at step-3. Single use addresses and coinjoin like transactions are predominantly used here.
20) **Mx3**
   **Input:** A parameter list -- list of tuples of arguments needed for each sub-function call
   **Description:** A sequential combination of 13 different types of transactions is called with the intervention of funds at step-4,6, and 9. Single use addresses and coinjoin like transactions are predominantly used here.
21) **Mx4**
   **Input:** A parameter list -- list of tuples of arguments needed for each sub-function call
   **Description:** A sequential combination of 9 different types of transactions is called with the intervention of funds at step-3,5, and 7. Coinjoins and coinjoin like transactions are predominantly used here.
22) **P2p**
   a. Txn_p2p1
   b. Txn_p2p2
   c. Txn_p2p3
   d. Class escrow
      i. Update_escrow1
      ii. Update_escrow2
      iii. Update_escrow3

   **Input:** var1,var2,var3,var4,var5,ts1,ts2,ts3
   **Description:** There are three transactions in a typical p2p exchange. Txn_p2p1is for transfer of funds from party A to escrow and its security deposit. There are certain differences here for trading fees and security deposit between A and B. Txn_p2p2is for transferring funds from party B to escrow and its security deposit. Txn_p2p3is the exchange transaction where funds are exchanged via escrow between A and B. Certain fees is deducted as platform charges and respective security deposits gets refunded. Update_escrow1, 2,3 are respectively the update functions for the above three transactions in a set.
   **Input description:** var1 = account of party A, var2 = account of party B, var3 = account of escrow, var4 = accounts of decentralized exchange, var5 = 1 address of A + 1 address of B + 1 address of decentralized exchange, ts1,2 and 3 are the timestamps for the three transactions.
23) **Txn_coffee**
   **Input:** var1,var2,var3,ts
   **Description:** This is to simulate transactions for a merchant type of entity. Here, inputs cannot be more than 4 as these are essentially small value bill payments. Similarly output can have at most of only 2 accounts, one of the merchant, other of the sender to receive any change.
24) **Lender**
   a. Txn_depositor_lender_investor
   b. Update_lending1
   c. Txn_investor_lender_depositor
   d. Update_lending2

   **Input:** var1,var2,var3,var4,ts; inputs, outputs, in_value, fees, term
   **Description:** To simulate transaction flow between depositor->lender->investor and vice versa. The transactions here include investment of crypto by depositors at lending platform, lending platform reinvesting them at investors, investors sending periodic rewards to platform, platform payouts depositors after a tenure with certain interest.
   **Input description:** var1 = depositor accounts, var2 = lender accounts, var3 = investor accounts, var4 = quantity of txns, term = a string representing if it is a depositor related transaction or investors to update values accordingly, in_value = respective values put in by senders of a transaction, fees = transaction fees
25) **P2p_simu**
   **Input:** n (positive number representing quantity of transactions needed)
   **Description:** This module facilitates the generation of p2p like transactions without providing any inputs. Providing it with only the quantity of transactions needed is sufficient.
   The module auto-initiates the accounts, their UTXOs, timestamps, and calls the p2p module with its input parameters and generates p2p transactions. This process can be repeated as needed.
26) **Licit**_**simu**
   **Input:** n (positive number representing quantity of transactions needed)
   **Description:** This module facilitates the generation of licit like transactions without providing any inputs. Providing it with only the quantity of transactions needed is sufficient. The module auto-initiates the accounts, their UTXOs, timestamps, and calls the regular, and a few commonly used transaction types such as txn_mn, txn_var12 modules with its input parameters and generates regular type of transactions without having any interactions with recorded illicit accounts. This process can be repeated as needed.
27) **Mix_gen_simu**
   **Input:** n (positive number representing quantity of transactions needed)
   **Description:** This module facilitates the generation of mixer like transactions without providing any inputs. Providing it with only the quantity of transactions needed is sufficient. The module auto-initiates the accounts, their UTXOs, timestamps, and calls the mixer modules such as Mx1 and Mx2 with its input parameters and generates mixer type of transactions. This process can be repeated as needed.
28) **Exg_simu**
   **Input:** n (positive number representing quantity of transactions needed)
   **Description:** This module facilitates the generation of exchange like transactions without providing any inputs. Providing it with only the quantity of transactions needed is sufficient. The module auto-initiates the accounts, their UTXOs, timestamps, and calls the needed modules with its input parameters and generates exchange like transactions. This process can be repeated as needed.
29) **Nested_exg_simu**
   **Input:** n (positive number representing quantity of transactions needed)
   **Description:** This module facilitates the generation of nested exchange like transactions without providing any inputs. Providing it with only the quantity of transactions needed is sufficient. The module auto-initiates the accounts, their UTXOs, timestamps, and calls the needed modules with its input parameters and generates nested exchange like transactions. This process can be repeated as needed.

Referring to FIG.2 that illustrates a high-level input/output diagram of the system of FIG. 1, it may be noted that given an input in the form of a mind map of a required transaction (txn) flow or a transaction schema with required class (entities) and distribution, the method of the present disclosure automatically parses a description, comprised in the transaction schema, of one or more sets of cryptocurrency transactions to be generated, using the function mapper module that maps and calls corresponding transaction simulator modules (one of the 29 modules described herein above) thereby creating an executable script or one or more sets of cryptocurrency transactions, from the received transaction schema. Optionally, a domain expert or a user customizes the created executable script which when executed generates simulated behavior embedded entity specific transactions.

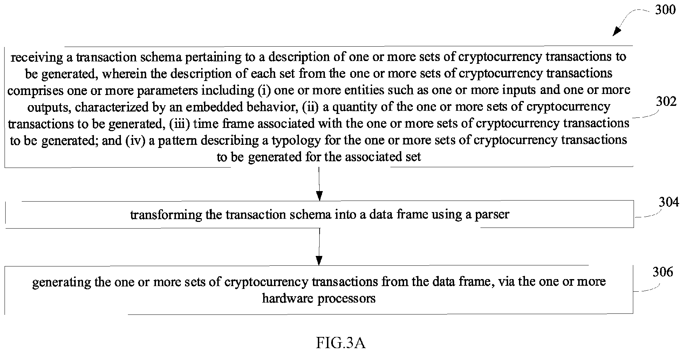

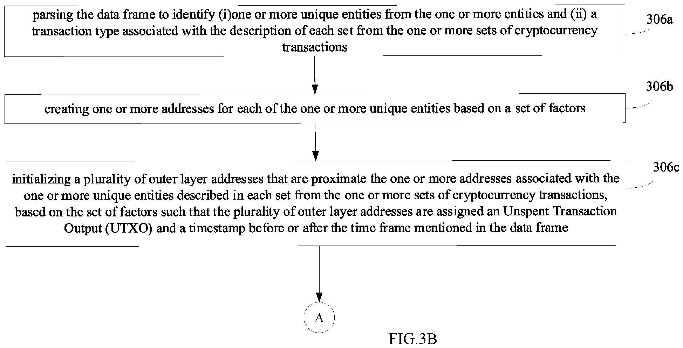

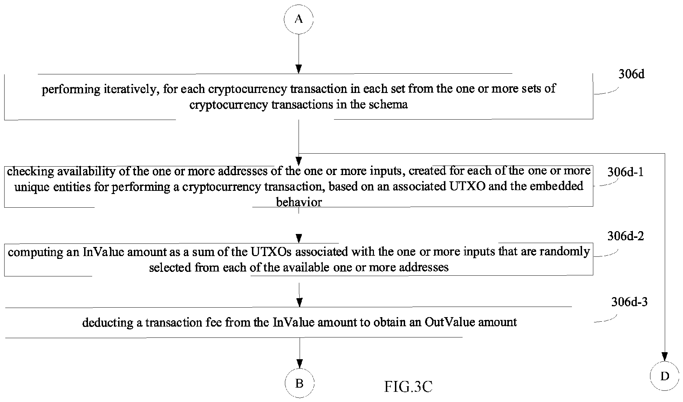

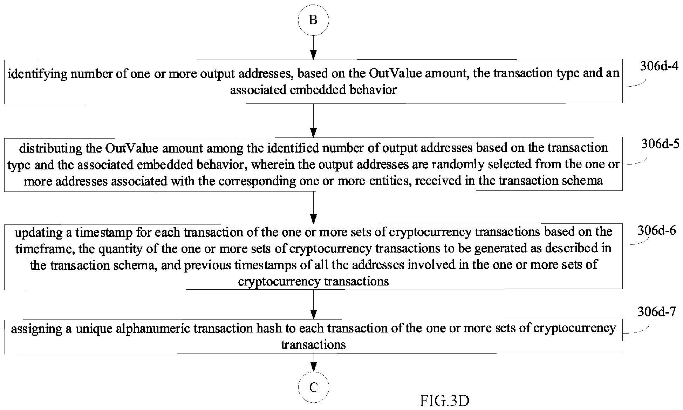

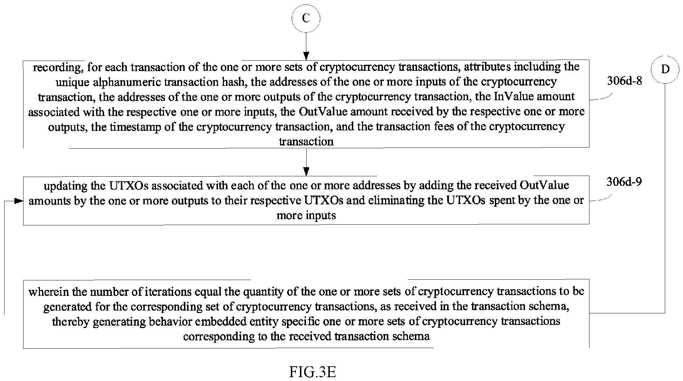

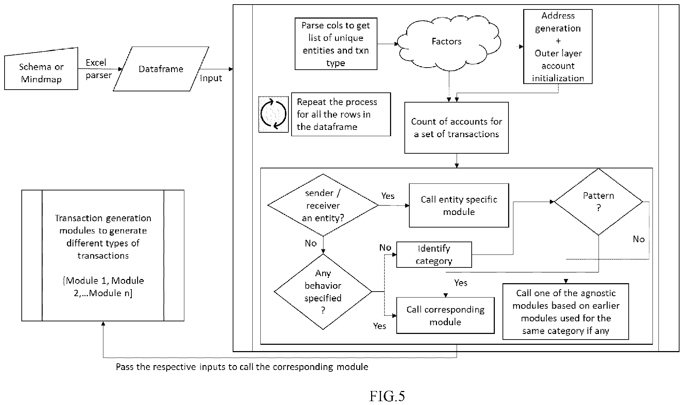

FIG.3A through FIG.3E illustrate an exemplary flow diagram of a computer implemented method 300 for generating behavior embedded entity specific cryptocurrency transactions, in accordance with some embodiments of the present disclosure. In an embodiment, the system 100 includes the memory 102 operatively coupled to the one or more hardware processors 104 and is configured to store instructions configured for execution of steps of the method 300 by the one or more hardware processors 104. The steps of the method 300 will now be explained in detail with reference to the components of the system 100 of FIG. 1, the input/output diagram of the system as illustrated in FIG.2, the input/output diagram of a transaction simulator module comprised in the system of FIG. 1 (not shown) as illustrated in FIG.4 and a high-level flow chart of the working of the function mapper module comprised in the system of FIG.1 (not shown) as illustrated in FIG.5, in accordance with some embodiments of the present disclosure.

Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

In accordance with the present disclosure, the one or more hardware processors 104, are configured to receive at step 302, a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, characterized by an embedded behavior, (ii) a quantity (count) of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set. An exemplary transaction schema with some exemplary description of the one or more sets (rows in the table below) are as shown in Table 1 below.

**Table 1: An exemplary transaction schema (Suffixes 0, 1, 2 represent discrete instances of the mentioned input(s) and output(s). Also, input / output names refer to the entities associated with a corresponding transaction simulator module)**

| **Pattern for the transaction (txn)** | **Count** | **Time frame** | **Input(s)** | **Output(s)** |
|---|---|---|---|---|
| Launderers often take advantage of the fluctuating exchange rates of fiat and crypto currency or vice versa. They may claim their sudden returns for the spike in exchange rate | 1200 | 17-03-20 | Exchange 1 | service add set 1 |
| The intermediate addresses often receive huge amounts in its first txn itself and very often the same would be carried forward | 2000 | 20-03-20 | service add 1 | service add 2 |
| Possibility of using multiple addresses all owned by the same entity but are different to outside world for making transactions such as change addresses | 1500 | 21-03-20 | service add 2 | single use |
| Transactions involving a mixer or similar services would charge from around 1-7% of the transaction value as commission or service charge apart from the standard txn_fee to the miners | 900 | 21-03-20 | single use | Mixer 0 |
| A customer's funds which are sourced directly from third-party mixing services or wallet tumblers is a red flag | 1000 | 24-03-20 | Mixer 0 | interm 1 |
| Launderers often make a lot of transactions in a 'short period' to obfuscate the monetary flow or make it difficult to track it -- such txns carry higher txn fees to be confirmed fast and to make subsequent txns from the new recipient address | 700 | 25-03-20 | interm 1 | interm 2 |
| Sender and receiver collaborate in inputs itself. This is to hide the actual amount of transfer; Interim and similar addresses will be left with a small balance (~6k sats) not making them completely zero. Could be to avoid red flags | 450 | 17-04-20 | mule 1 + mule 2 | mule 3 + mule 4 + mule 1 |
| Money mules are used in intermittent txns and for claiming payments from other entities | 270 | 27-04-20 | mule 5 | mule 1 + mule 3 |

In accordance with the present disclosure, the one or more entities are associated with an entity type, wherein the entity type is licit, nested exchange, escrow-ent, service address, mixer-ent, exchange, crypto lending, interim address, mule, decentralized exchange, business or single use address. Also, each set from the one or more sets of cryptocurrency transactions is associated with a transaction type wherein the transaction type is regular, investor-lender-depositor (ILD), coinjoin, single use->single use (Sgl -->Sgl), mixer-Tx, peer-to-peer (P2P), single use to general (Sgl - >gen), general to single use (gen → Sgl), escrow-Tx, Depositor -> Lender -> Investor (DLI), general to general (gen → gen), or collaboration between the one or more inputs and the one or more outputs (in+out → in+out).

As described above, there are different transaction simulator modules pertaining to various entities and transaction types. For any of these transaction simulator modules to work, the one or more parameters, received in the transaction schema, provide the input specification (refer FIG.4 - first block). However, the description in the transaction schema being a mind map, cannot be directly executed. In accordance with the present disclosure, the one or more hardware processors 104, are configured to transform, at step 304, the transaction schema received in step 302, into a data frame using a parser. In an embodiment for a transaction schema as shown in Table 1, the parser is an excel parser (exemplary reference in FIG.2 and FIG.5). In another example, if the transaction schema is a JavaScript Object Notation (JSON) file, then a JSON parser is used. The second block is the transaction simulator that receives the input specification and generates simulated cryptocurrency transactions. The transaction simulator is a collection of different transaction generation modules each configured towards generating different types of patterns related to various entities and transaction types. Each entity typically follows certain transaction types and sometimes a combination or a sequence of a few. The internal blocks of the transaction simulator in FIG.4 depict this relation. The transaction simulator generates different types of entities' behaviors as illustrated by `Entity Types' and different transaction types based on the input specification illustrated as `Transaction Types' in the transaction simulator block and described herein after

Detailed below is a description of each of the (A) entity types and (B) transaction types, in accordance with some embodiments of the present disclosure.
(A) Entity types:
   1) **Licit:** These are genuine accounts usually related to general Bitcoin users, miners, verifiable organizations and so on. These are not involved in illicit activities. However, certain illicit accounts may send certain small funds to them occasionally as a layering technique in money laundering.
   2) **Exchange:** Crypto exchanges play an important role in circulating Bitcoins. Exchanges are usually centralized where they own a large number of accounts in Bitcoin and across other chains and platforms as well. They typically take fiat money off-chain and transfer Bitcoins to their customers who thereafter make transactions with them. Similarly, they also help in transferring Bitcoin between different Bitcoin wallets and accounts and help in converting Bitcoin back to fiat money or to altcoins.
   3) **Decentralized exchange:** These do the same as Exchanges with a difference in the way they operate. Unlike exchanges, these are decentralized. They usually do not own a large number of accounts and are also not very widely used compared to exchanges. Decentralized exchanges use an escrow mechanism to facilitate transfer of funds. For instance, if A wants to exchange something with B in a decentralized way, then A and B can transfer their funds to an escrow account which is a multi-signature wallet that needs at least two signatures to unlock the funds. A and B with their keys will have to sign the transactions approving the transfer of funds as intended from the escrow account. The funds will not be transferred if either party is not signing the transaction. In case of a dispute, decentralized exchange can use its key to sign the transaction upon verification of the concern. Security deposits will have to be deposited from both the parties in the beginning to facilitate dispute resolution.
   4) **Nested exchange:** These are not regular exchanges. They have their accounts in exchanges but are not exchanges themselves. They use a chain of transactions to transfer the funds across different accounts in different exchanges and wallets. These are usually used as a layering technique.
   5) **Escrow-ent:** Described in decentralized exchange.
   6) **Mixer-ent:** These are third party services available in the crypto ecosystem that facilitate mixing of funds from different parties thereby making it difficult to figure out who is sending/receiving from whom and what is being transferred. They follow a complicated trail of transactions to do this by mixing funds from various accounts.
   7) **Mule:** These are considered licit. However, knowingly, or unknowingly, they get involved with illicit activities where they make certain transactions from the large illicit trail.
   8) **Business:** These are usually accounts used by illicit entities showcasing them to be related to certain legit business activity. However, they are used in the integration phase of money laundering to show a legit source for laundered money.
   9) **Crypto lending:** This is also a type of business category where they create a crypto lending platform. Retail borrowers deposit their crypto assets in the platform for a certain period to get fiat cash. Platform will use this deposited crypto to invest in other businesses or offer services. Such businesses or customers will pay the platform a certain amount periodically which will be shown as a legitimate source of their illicit funds. We have two parties here: lending platform and investors.
   10) **Service address:** Entities such as Exchanges, Nested exchanges, Mixer and the like, employ a large set of addresses usually referred to as service addresses who make transactions on its behalf in dealing with numerous customers and other addresses. Service addresses are revised frequently.
   11) **Interim address:** These are the accounts used by illicit entities to make their transactions and interactions with different entities like mixers, exchanges etc.
   12) **Single use address:** These are one time use addresses. They receive something and they send it to someone, and they are never used again. These are widely used by all the entities to make transfers and extend the chain length, so that, in case, an entity they dealt with is found to be illicit, they can be safeguarded as they are a few rounds away from the illicitly identified party due to transactions made with single use addresses.
(B) Transaction types:
   1) **Regular:** These are the usual transactions; they typically do not follow a certain pattern and are widely used by almost all the entities.
   2) **DLI:** Denotes chain of transactions from Depositor -> Lender -> Investor. Used to make the mentioned chain of transactions between three parties and helps to track the funds deposited by respective accounts of depositors, funds retained by the lending platform, funds transferred to respective investor accounts from the respective lender accounts.
   3) **ILD:** Denotes chain of transactions from Investor -> Lender -> Depositor. Also, used to compute and return the interest for the fund deposited by the respective lender accounts and in turn to the depositor accounts.
   4) **P2P:** Represents peer-to-peer (party 1, party2) transactions. Used for transferring funds from party 1 to escrow, party2 to escrow, security depositing, and escrow to party 1 and party2 deducting certain percentage as a platform fee.
   5) **Escrow-Tx:** Subclass of P2P to track and facilitate exchange of deposited funds, transfer back of security deposits, deduction of platform fee and sending this fee to the account of decentralized exchange.
   6) **Mixer-Tx:** This has four sub classes to represent different types of mixers. Each of those facilitates mixing in different ways.
   7) **Coinjoin:** It is a transaction type where both sender and receiver collaborate and act as the senders and receivers of the transaction (Sender+Receiver -> Sender+Receiver). Every account receives an equal amount thereby making it difficult to understand who is transferring to whom and trace the subsequent transactions.
   8) **Sgl->Sgl:** Represents transactions between two sets of single use addresses. Helps to track the occurrence of a single use address and remove it if its limit is exceeded. Sender single use addresses cannot send any further and receiver single use addresses cannot receive any further. Vice versa hold true. There is an additional subclass to facilitate coinjoin type of transaction along with Sgl->Sgl behavior to additionally incorporate same value transfer property.
   9) **Sgl->Gen:** Represents transfer from a set of single use addresses to a set of general addresses. Sender single use addresses cannot send any further. There is an additional subclass to facilitate coinjoin type of transaction along with Sgl->Gen behavior to additionally incorporate same value transfer property.
   10) **Gen->Sgl:** Represents transfer from a set of general addresses to a set of single use addresses. The recipient single use addresses cannot receive any funds further. There is an additional subclass to facilitate coinjoin type of transaction along with Gen->Sgl behavior to additionally incorporate same value transfer property.
   11) **Gen->Gen:** Represents transfer from a set of general addresses to a set of general addresses. There are certain patterns seen here such as having only a specific number of accounts on one side or either side of a transaction.
   12) **In+Out->In->Out:** Senders and receivers of a transaction collaborate and act as senders and receivers of a transaction like in Coinjoin but here, it is not needed that the amount received from any account needs to be the same. It is used to make transactions between different entities combining them on either side.

As mentioned, there are different transaction simulator modules to simulate different types of patterns, transactions and those pertaining to specific entities. A generated transaction has 7 attributes including a unique alphanumeric transaction hash, the addresses of the one or more inputs of the cryptocurrency transaction, the addresses of the one or more outputs of the cryptocurrency transaction, an InValue amount associated with the respective one or more inputs, the OutValue amount received by the respective one or more outputs, a timestamp of the cryptocurrency transaction, and a transaction fee of the cryptocurrency transaction. Given the input specification in the transaction schema, the mentioned attributes are returned for every transaction.

Step 306 described hereinafter explains simulation of a transaction without any specific pattern. In accordance with the present disclosure, the one or more hardware processors 104, are configured to generate, at step 306, the one or more sets of cryptocurrency transactions from the data frame. While the description of the one or more sets of cryptocurrency transactions to be generated may be passed on to the transaction simulator modules described earlier, it is challenging to map the one or more parameters and identify the specific transaction simulator module that can generate the required one or more sets of cryptocurrency transactions. The one or more inputs and the one or more outputs are mapped based on the one or more unique entities identified from the transaction schema and those that the transaction simulator module can generate. Accordingly, the step of generating the one or more sets of cryptocurrency transactions comprises parsing the data frame, via the function mapper module at step 306a, to identify (i) one or more unique entities from the one or more entities (referred as cols or columns in FIG.5) and (ii) the transaction type associated with the description of each set from the one or more sets of cryptocurrency transactions. Referring to the description of the one or more sets as shown in Table 1, as an example, the entity 'service add 2' occurs in rows 2 and 3 but one instance would be identified as a unique entity. Likewise, the transaction type is based on the one or more inputs and the one or more outputs described for each set in the Table 1.

In accordance with the present disclosure, the step of generating the one or more sets of cryptocurrency transactions then comprises creating one or more addresses, via the function mapper module at step 306b, for each of the one or more unique entities based on a set of factors. In an embodiment, the set of factors that define the quantity of the one or more addresses includes: (i) number of times each of the one or more unique entities are described in the transaction schema; (ii) whether each of the one or more unique entities is part of the one or more inputs or the one or more outputs; and (iii) the quantity of the one or more sets of cryptocurrency transactions corresponding to each of the one or more unique entities in an associated set of cryptocurrency transactions, described in the transaction schema. There are subcases that maybe evaluated further to get a more appropriate quantity of the one or more addresses. For instance, consider the category of service addresses that have transactions with a lot of entities. The number of service addresses seen transacting to/from an exchange category is relatively higher than those that are transacting to/from an interim address category and a set of addresses may be suspended upon reaching a certain number of interactions and are replaced with new addresses. For any entity, there is usually a range of quantities that is seen in real transactions. Factors like these are considered to converge to a realistic number. The set of addresses used for a subsequent transaction depends on the set of earlier used addresses from the same entity. In accordance with the present disclosure, the transaction generation modules are configured for generating specific types of behavior. Therefore, based on the description of the transaction schema, the respective transaction simulating module is called.

Cryptocurrency transactions are a continuous chain of interactions between numerous addresses and therefore, it is not practically possible to simulate infinite chains. Therefore, it is important to scope this to certain limit such as addresses of interest and their immediate neighbors. In accordance with the current disclosure, in 2 levels or 1 hop of transactions, if level 1 is considered as addresses of interest and level 2 as their neighbors which is basically 1 hop from interested addresses, the understanding can be extended to 'n' hops where the neighbors of 1st level accounts are in 2nd level and neighbors of 2nd level accounts are in third level and so on. If 1 hop is needed, which is A<->B(<->C), 'A' represents addresses of interest which can include addresses of different categories as seen in the exemplary transaction schema of Table 1. When simulating interactions between the created addresses, A and B are obtained. However, to complete the behavior of 'B' which is the second level, its transactions which are basically done with its neighbors in third level which are not considered above also need to be considered. For such simulation, a set of outer layer addresses are used to complete behavior of 'B'. In this example, the scope is A and its neighbors which is represented by B. To complete behavior of B, transactions of B with its neighbors C which is level 3 needs to be considered. In accordance with the present disclosure, the outer layer addresses are certain addresses that are not specified in the transaction schema but are created and made to have transactions with the entities specified so that the behavior of the specified entities is completed. Cryptocurrency transactions are simulated between outer layer addresses and entities through which entities get their UTXOs.

Accordingly, the step of generating the one or more sets of cryptocurrency transactions further comprises initializing, at step 306c, a plurality of outer layer addresses (and thereby initializing associated entities) that are proximate the one or more addresses associated with the one or more unique entities described in each set from the one or more sets of cryptocurrency transactions, based on the set of factors such that the plurality of outer layer addresses are assigned the UTXO and a timestamp before or after the time frame mentioned in the data frame.

In accordance with the present disclosure, the one or more hardware processors 104, are configured to perform iteratively, for each cryptocurrency transaction in each set from the one or more sets of cryptocurrency transactions in the schema, steps 306d-1 through 306d-9 described hereinafter, wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

Cryptocurrency like Bitcoin follows the UTXO mechanism for their transactions, wherein the UTXO represents the amount an address has received from an earlier transaction that it has not spent. For an address to act as an input (sender) in any transaction, it is mandatory for it to have a valid and sufficient UTXO. Accordingly, step 306d-1 involves checking availability of the one or more addresses of the one or more inputs, created for each of the one or more unique entities for performing a cryptocurrency transaction, based on an associated UTXO and the embedded behavior. Availability, in accordance with the present disclosure, specifies if the address has a UTXO that is sufficiently large to accommodate a list of outputs (receivers) along with the transaction fee for the transaction, if it is considered to be an input address for a transaction. In a cryptocurrency transaction, an input can appear for multiple instances on either side of a transaction as seen in the exemplary transaction schema of Table 1, availability also specifies how many such UTXOs are there for a given address. The step 306d-1 is therefore executed for every address pertaining to an entity specified in the transaction schema as the input for the corresponding set of transactions, to obtain an available list of the one or more addresses pertaining to the corresponding entity .

Once the availability is ascertained, a sample of addresses that are available are randomly selected and the UTXO is calculated for each of these addresses. These sample addresses are the one or more inputs for a transaction and associated UTXO is the value each of them contributes to a transaction. Accordingly, step 306d-2 involves computing an InValue amount as a sum of the UTXOs associated with the one or more inputs that are randomly selected from each of the available one or more addresses. To avoid dusting attacks, in an embodiment, a threshold is levied to send at least 5460 Satoshis (dust value or the amount of cryptocurrency equal to or lower than a transaction fee) to every output (receiver) address.

To obtain the one or more outputs (receivers) of the transaction, the method 300 identifies how many addresses can these one or more inputs (senders) accommodate. The transaction fee is the processing fee of a transaction to be paid by the one or more inputs in a transaction and is computed based on the embedded behavior associated with the involved entities or the transaction type. Therefore, the transaction fee is deducted from the In Value of the one or more input addresses to identify the one or more outputs for the given input specification. Accordingly, step 306d-3 involves deducting a transaction fee from the InValue amount to obtain an OutValue amount ,and step 306d-4 involves identifying number of one or more output addresses, based on the OutValue amount, the transaction type and an associated embedded behavior.

The step of identifying number of one or more output addresses is followed by a step 306d-5 that involves distributing the OutValue amount among the identified number of one or more output addresses based on the transaction type and the associated embedded behavior, wherein the one or more output addresses are randomly selected from the one or more addresses associated with the corresponding one or more entities, received in the transaction schema.

Every address has a last transaction timestamp. A subsequent transaction takes place only after the latest timestamp of all the addresses involved in a transaction on either side is attributed. Based on the time frame and the quantity of the one or more sets of cryptocurrency transactions to be generated mentioned in the transaction schema and previous timestamps of all the addresses involved, a timestamp is assigned. Accordingly, the timestamp is updated, at step 306d-6.

A unique alphanumeric transaction hash is then assigned, at step 306d-7, to each transaction of the one or more sets of cryptocurrency transactions. For each generated transaction of the one or more sets of cryptocurrency transactions, at step 306d-8, attributes including the unique alphanumeric transaction hash, the addresses of the one or more inputs of the cryptocurrency transaction, the addresses of the one or more outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction are recorded. Finally, at step 306d-9, the UTXOs associated with each of the one or more addresses are updated, by adding the received OutValue amounts by the one or more outputs to their respective UTXOs and eliminating the UTXOs spent by the one or more inputs.

While the step 306 described simulation of a transaction without any specific pattern, there may be a requirement that does not need a sequential flow of transactions. In an embodiment of the present disclosure, in the event that the description of each set from the one or more sets of cryptocurrency transactions comprises only (i) the quantity of the one or more sets of cryptocurrency transactions to be generated and (ii) the pattern describing a typology for the one or more sets of cryptocurrency transactions to be generated for the associated set, the remaining parameters from the one or more parameters in the transaction schema are auto filled based on a pre-populated repository of transaction schemas with typologies described therein.

In a simulation of a patterned transaction, consider a simple transaction type, say, Coinjoin type of transactions where the given one or more inputs are combined with the one or more outputs and a combined set of addresses are used as the one or more parameters - one or more inputs and one or more outputs. For incorporating another property of Coinjoin which is to have same value transfer, the regular behavior is tweaked by equally dividing a balance amount amongst the one or more outputs, thereby making every output (receiver) receive a same value. For more complex patterns and for complicated entities like mixers and so on, numerous tweaks in the default behavior are made and certain add-ons are used to check or track certain behaviors in transactions.

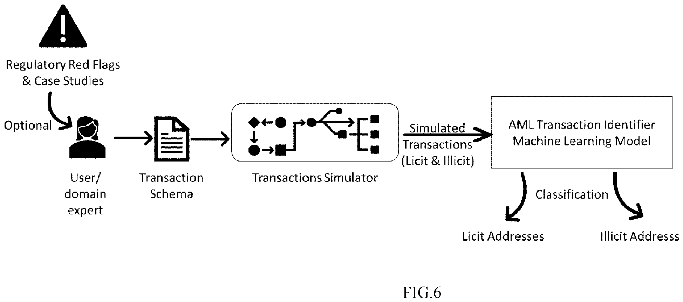

FIG.6 illustrates a practical application for the system of FIG. 1 in an Anti-Money Laundering (AML) use case, in accordance with some embodiments of the present disclosure. The transaction simulator described in the present disclosure is developed based on real case studies and patterns observed in various crypto addresses pertaining to different entities and scenarios. Using the data generated from the transaction simulator for a given transaction schema, AI models were trained. For using the application, a user provides a crypto/Bitcoin address of interest. Using an Application Programming Interface (API) call to a third-party data provider, transactions associated with the user provided crypto address are obtained for inference from a selected AI model (referred as AML Transaction Identifier Machine Learning Model in the figure). Feature engineering is exercised on the collected transactions for attribute computation where attributes of the transactions that help in its classification are identified and computed. Additionally, clustering is done to capture additional insights from the transactions. All the computed attributes are passed to the AI model which is trained on a similar set of attributes computed from the transactions simulated by the Transaction simulator of the present disclosure. The trained AI model then provides its prediction for the provided crypto address based on the attributes passed to it, created from its transactions. As part of further analytics, an explainer model can be employed to understand what attributes contribute or influence a certain prediction, have a snapshot of analysis showcasing graphical interactions of various addresses seen in the transactional data, risk analytics and so on.

Thus, the methods and systems of the present disclosure address the key challenge of implementing behavior embedded entity specific simulated transactions considering the information pertaining to the nature of entities in the cryptocurrency transactions is not easily available considering cryptocurrency addresses are pseudo-anonymous. Different entities may have different characteristics, making it difficult to model their behavior. Often, addresses of same entity type behave differently and it is important to generalize their behavior. There could be interdependent factors influencing certain attributes of entities. Such core behavior needs to be analyzed. Tracking transactions and interactions of various addresses to model them is difficult. Complexity of modelling tremendously increases with slightest increase in entity count or while embedding new behavior or a characteristic. It could involve changes at many levels. Implementation takes significant time, effort and domain knowledge. Correlating entities' behavior with money laundering methods is also tricky due to unavailability of direct correlation.

To train a machine learning model, there is a need for a large amount of quality data that is rich in patterns that are intended to be inferred. This makes the model learn such patterns and predict them in real data. However, obtaining such data without methods and systems as discussed in the present disclosure is a herculean task as the identification, collection, and processing of the data each have their own set of challenges. The present disclosure enables this and results in saving manual effort, time and resources.

Money laundering addresses as is a positive class, is very rare to be seen in a real sample of transactions. For instance, there could be 1 in 10000 or more transactions, which makes it difficult to model. Besides the illicit transactions being rare, due to the inherent pseudo-anonymity, it becomes difficult to identify them which requires tremendous exploration. Therefore, simulation of the patterns that launderers have used, as enabled by the present disclosure helps in simulating the required illicit transactions suitable enough for the model training specific to use cases.

Once a set of addresses are identified, it is computationally challenging to collect all their transactions. Because transactions could span across timeframes and therefore a single data dump cannot be used to collect the transactions. Also, the dump is crude in format. Another way to get transactions is to directly connect to the Bitcoin core node which is resource intensive. Alternatively, the APIs of third-party block explorers can be used, however, they have certain limitations which is not suitable for collecting the needed number of transactions.

Upon data collection, it is again a strenuous and resource intensive task to process it. The required fields from the mammoth data need to be parsed, extracted, and processed. At times, if the source of data is different or multiple sources were used, it is also required to bring them to some common format for subsequent processing. Huge infrastructure is required to do all these tasks which take in both computational power and time. The methods and resource-light systems of the present disclosure brings in resource efficiency, computation efficiency and time efficiency besides enabling customization and scalability in the generated cryptocurrency transactions. The methods and systems of the present disclosure also help to generate training data over longer periods of time (unlike the existing short-interval datasets or works based on them), thus, facilitating the AI models to be trained on bigger, diverse, and pattern-rich data which therefore can be scaled to larger use cases and also would be able to efficiently detect illicit activities. The generated data is labelled with a variety of classes (unlike Boolean/Binary classes) associated with corresponding entities, making it in line with the requirements of state-of-the-art AI models.

The method and system of the present disclosure were tested for accuracy using a dataset created based on simulated addresses (1.26lakh samples). The simulated transactions were further enhanced using 130 attributes. The validated real transactions showed an accuracy of about 67% for some AI models. The AI models can be further fine-tuned for improved accuracy.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) comprising:
receiving, via one or more hardware processors, a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, **characterized by** an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set (302);
transforming, via the one or more hardware processors, the transaction schema into a data frame using a parser (304); and
generating the one or more sets of cryptocurrency transactions from the data frame, via the one or more hardware processors (306), the step of generating the one or more sets of cryptocurrency transactions comprising:
parsing the data frame to identify (i) one or more unique entities from the one or more entities and (ii) a transaction type associated with the description of each set from the one or more sets of cryptocurrency transactions (306a);
creating one or more addresses for each of the one or more unique entities based on a set of factors (306b);
initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame (306c); and
performing iteratively (306d), for each cryptocurrency transaction in each set from the one or more sets of cryptocurrency transactions in the schema, the steps of:
checking availability of the one or more addresses of the one or more inputs, created for each of the one or more unique entities for performing a cryptocurrency transaction, based on an associated UTXO and the embedded behavior (306d-1);
computing an In Value amount as a sum of the UTXOs associated with the one or more inputs that are randomly selected from each of the available one or more addresses (306d-2);
deducting a transaction fee from the InValue amount to obtain an OutValue amount (306d-3);
identifying number of one or more output addresses, based on the OutValue amount, the transaction type and an associated embedded behavior (306d-4);
distributing the OutValue amount among the identified number of one or more output addresses based on the transaction type and the associated embedded behavior, wherein the one or more output addresses are randomly selected from the one or more addresses associated with the corresponding one or more entities, received in the transaction schema(306d-5);
updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the one or more sets of cryptocurrency transactions (306d-6);
assigning a unique alphanumeric transaction hash to each transaction of the one or more sets of cryptocurrency transactions (306d-7);
recording, for each transaction of the one or more sets of cryptocurrency transactions, attributes including the unique alphanumeric transaction hash, the addresses of the one or more inputs of the cryptocurrency transaction, the addresses of the one or more outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction (306d-8); and
updating the UTXOs associated with each of the one or more addresses by adding the received OutValue amounts by the one or more outputs to their respective UTXOs and eliminating the UTXOs spent by the one or more inputs (306d-9),
wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

2. The processor implemented method as claimed in claim 1, wherein the one or more entities are associated with an entity type, and wherein the entity type is a licit, a nested exchange, an escrow-ent, a service address, a mixer-ent, an exchange, a crypto lending, an interim address, a mule, a decentralized exchange, a business or a single use address.

3. The processor implemented method as claimed in claim 1, wherein each set from the one or more sets of cryptocurrency transactions is associated with the transaction type, and wherein the transaction type is regular, investor-lender-depositor (ILD), coinjoin, single use -->single use (Sgl -->Sgl), mixer-Txn, peer-to-peer (P2P), single use to general (Sgl -->gen), general to single use (gen → Sgl), escrow-Txn, Depositor -> Lender -> Investor (DLI), general to general (gen → gen), or collaboration between the one or more inputs and the one or more outputs (in+out 4 in+out).

4. The processor implemented method as claimed in claim 1, wherein the set of factors that define the quantity of the one or more addresses includes:
(i) number of times each of the one or more unique entities are described in the transaction schema;
(ii) whether each of the one or more unique entities is part of the one or more inputs or the one or more outputs; and
(iii) the quantity of the one or more sets of cryptocurrency transactions corresponding to each of the one or more unique entities in an associated set of cryptocurrency transactions, described in the transaction schema.

5. The processor implemented method as claimed in claim 1, wherein in the event that the description of each set from the one or more sets of cryptocurrency transactions comprises only (i) the quantity of the one or more sets of cryptocurrency transactions to be generated and (ii) the pattern describing a typology for the one or more sets of cryptocurrency transactions to be generated for the associated set, the remaining parameters from the one or more parameters in the transaction schema are auto filled based on a pre-populated repository of transaction schemas with typologies described therein.

6. A system (100) comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, **characterized by** an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set;
transform the transaction schema into a data frame using a parser; and
generate the one or more sets of cryptocurrency transactions from the data frame, the step of generating the one or more sets of cryptocurrency transactions comprising:
parsing the data frame to identify (i) one or more unique entities from the one or more entities and (ii) a transaction type associated with the description of each set from the one or more sets of cryptocurrency transactions;
creating one or more addresses for each of the one or more unique entities based on a set of factors;
initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame; and
performing iteratively, for each cryptocurrency transaction in each set from the one or more sets of cryptocurrency transactions in the schema, the steps of:
checking availability of the one or more addresses of the one or more inputs, created for each of the one or more unique entities for performing a cryptocurrency transaction, based on an associated UTXO and the embedded behavior;
computing an In Value amount as a sum of the UTXOs associated with the one or more inputs that are randomly selected from each of the available one or more addresses;
deducting a transaction fee from the InValue amount to obtain an OutValue amount;
identifying number of one or more output addresses, based on the OutValue amount, the transaction type and an associated embedded behavior;
distributing the OutValue amount among the identified number of one or more output addresses based on the transaction type and the associated embedded behavior, wherein the one or more output addresses are randomly selected from the one or more addresses associated with the corresponding one or more entities, received in the transaction schema;
updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the cryptocurrency transactions;
assigning a unique alphanumeric transaction hash to each transaction of the one or more sets of cryptocurrency transactions;
recording, for each transaction of the one or more sets of cryptocurrency transactions, attributes including the unique alphanumeric transaction hash, the addresses of the one or more inputs of the cryptocurrency transaction, the addresses of the outputs of the cryptocurrency transaction, the In Value amount associated with the respective one or more inputs, the OutValue amount received by the respective one or more outputs, the timestamp of the cryptocurrency transaction, and the transaction fees of the cryptocurrency transaction; and
updating the UTXOs associated with each of the one or more addresses by adding the received OutValue amounts by the one or more outputs to their respective UTXOs and eliminating the UTXOs spent by the one or more inputs,
wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

7. The system as claimed in claim 6, wherein the one or more entities are associated with an entity type, and wherein the entity type is licit, nested exchange, escrow-ent, service address, mixer-ent, exchange, crypto lending, interim address, mule, decentralized exchange, business or single use address.

8. The system as claimed in claim 6, wherein each set from the one or more sets of cryptocurrency transactions is associated with the transaction type, and wherein the transaction type is regular, investor-lender-depositor (ILD), coinjoin, single use -->single use (Sgl -->Sgl), mixer-Tx, peer-to-peer (P2P), single use to general (Sgl -->gen), general to single use (gen → Sgl), escrow-Tx, Depositor -> Lender -> Investor (DLI), general to general (gen → gen), or collaboration between the one or more inputs and the one or more outputs (in+out → in+out).

9. The system as claimed in claim 6, wherein the set of factors that define the quantity of the one or more addresses includes:
(i) number of times each of the one or more unique entities are described in the transaction schema;
(ii) whether each of the one or more unique entities is part of the one or more inputs or the one or more outputs; and
(iii) the quantity of the one or more sets of cryptocurrency transactions corresponding to each of the one or more unique entities in an associated set of cryptocurrency transactions, described in the transaction schema.

10. The system as claimed in claim 6, wherein the one or more processors are further configured by the instructions to auto fill remaining parameters from the one or more parameters in the transaction schema, based on a pre-populated repository of transaction schemas with typologies described therein, in the event that the description of each set from the one or more sets of cryptocurrency transactions comprises only the (i) the quantity of the one or more sets of cryptocurrency transactions to be generated and (ii) the pattern describing a typology for the one or more sets of cryptocurrency transactions to be generated for the associated set.

11. One or more non-transitory machine-readable information storage mediums comprising one or more instructions which when executed by one or more hardware processors cause:
receiving a transaction schema pertaining to a description of one or more sets of cryptocurrency transactions to be generated, wherein the description of each set from the one or more sets of cryptocurrency transactions comprises one or more parameters including (i) one or more entities such as one or more inputs and one or more outputs, **characterized by** an embedded behavior, (ii) a quantity of the one or more sets of cryptocurrency transactions to be generated, (iii) time frame associated with the one or more sets of cryptocurrency transactions to be generated; and (iv) a pattern describing a typology for the one or more sets of cryptocurrency transactions to be generated for the associated set;
transforming the transaction schema into a data frame using a parser; and
generating the one or more sets of cryptocurrency transactions from the data frame the step of generating the one or more sets of cryptocurrency transactions comprising:
parsing the data frame to identify (i) one or more unique entities from the one or more entities and (ii) a transaction type associated with the description of each set from the one or more sets of cryptocurrency transactions;
creating one or more addresses for each of the one or more unique entities based on a set of factors;
initializing a plurality of outer layer addresses that are proximate the one or more addresses associated with the one or more unique entities described in each set from the one or more sets of cryptocurrency transactions, based on the set of factors such that the plurality of outer layer addresses are assigned an Unspent Transaction Output (UTXO) and a timestamp before or after the time frame mentioned in the data frame; and
performing iteratively, for each cryptocurrency transaction in each set from the one or more sets of cryptocurrency transactions in the schema, the steps of:
checking availability of the one or more addresses of the one or more inputs, created for each of the one or more unique entities for performing a cryptocurrency transaction, based on an associated UTXO and the embedded behavior;
computing an In Value amount as a sum of the UTXOs associated with the one or more inputs that are randomly selected from each of the available one or more addresses;
deducting a transaction fee from the InValue amount to obtain an OutValue amount;
identifying number of one or more output addresses, based on the OutValue amount, the transaction type and an associated embedded behavior;
distributing the OutValue amount among the identified number of one or more output addresses based on the transaction type and the associated embedded behavior, wherein the one or more output addresses are randomly selected from the one or more addresses associated with the corresponding one or more entities, received in the transaction schema;
updating a timestamp for each transaction of the one or more sets of cryptocurrency transactions based on the timeframe, the quantity of the one or more sets of cryptocurrency transactions to be generated as described in the transaction schema, and previous timestamps of all the addresses involved in the one or more sets of cryptocurrency transactions;
assigning a unique alphanumeric transaction hash to each transaction of the one or more sets of cryptocurrency transactions;
recording, for each transaction of the one or more sets of cryptocurrency transactions, attributes including the unique alphanumeric transaction hash, the addresses of the one or more inputs of the cryptocurrency transaction, the addresses of the one or more outputs of the cryptocurrency transaction, the InValue amount associated with the respective one or more inputs, the OutValue amount received by the respective one or more outputs, the timestamp of the cryptocurrency transaction, and the transaction fees of the cryptocurrency transaction; and
updating the UTXOs associated with each of the one or more addresses by adding the received OutValue amounts by the one or more outputs to their respective UTXOs and eliminating the UTXOs spent by the one or more inputs,
wherein the number of iterations equal the quantity of the one or more sets of cryptocurrency transactions to be generated for the corresponding set of cryptocurrency transactions, as received in the transaction schema, thereby generating behavior embedded entity specific one or more sets of cryptocurrency transactions corresponding to the received transaction schema.

12. The one or more non-transitory machine-readable information storage mediums as claimed in claim 11, wherein the one or more entities are associated with an entity type, and wherein the entity type is a licit, a nested exchange, an escrowent, a service address, a mixer-ent, an exchange, a crypto lending, an interim address, a mule, a decentralized exchange, a business or a single use address.

13. The one or more non-transitory machine-readable information storage mediums as claimed in claim 11, wherein each set from the one or more sets of cryptocurrency transactions is associated with the transaction type, and wherein the transaction type is regular, investor-lender-depositor (ILD), coinjoin, single use -->single use (Sgl -->Sgl), mixer-Txn, peer-to-peer (P2P), single use to general (Sgl -->gen), general to single use (gen → Sgl), escrow-Txn, Depositor -> Lender -> Investor (DLI), general to general (gen → gen), or collaboration between the one or more inputs and the one or more outputs (in+out → in+out).

14. The one or more non-transitory machine-readable information storage mediums as claimed in claim 11, wherein the set of factors that define the quantity of the one or more addresses includes:
(i) number of times each of the one or more unique entities are described in the transaction schema;
(ii) whether each of the one or more unique entities is part of the one or more inputs or the one or more outputs; and
(iii) the quantity of the one or more sets of cryptocurrency transactions corresponding to each of the one or more unique entities in an associated set of cryptocurrency transactions, described in the transaction schema.

15. The one or more non-transitory machine-readable information storage mediums as claimed in claim 11, wherein the one or more instructions which when executed by the one or more hardware processors further cause auto filling of the remaining parameters from the one or more parameters in the transaction schema based on a pre-populated repository of transaction schemas with typologies described therein, in the event that the description of each set from the one or more sets of cryptocurrency transactions comprises only (i) the quantity of the one or more sets of cryptocurrency transactions to be generated and (ii) the pattern describing a typology for the one or more sets of cryptocurrency transactions to be generated for the associated set.
